(19) **Europäisches Patentamt / European Patent Office / Office européen des brevets**

(11) **EP 4 621 865 A1**

(12) **EUROPEAN PATENT APPLICATION**

(43) Date of publication:
24.09.2025 Bulletin 2025/39

(21) Application number: 24315106.5

(22) Date of filing: 22.03.2024

(51) International Patent Classification (IPC):
$H01M\ 4/131^{(2010.01)}$   $H01M\ 4/1397^{(2010.01)}$
$H01M\ 4/36^{(2006.01)}$   $H01M\ 4/58^{(2010.01)}$
$H01M\ 10/0525^{(2010.01)}$   $H01M\ 10/0562^{(2010.01)}$
$H01M\ 4/134^{(2010.01)}$   $H01M\ 4/1395^{(2010.01)}$
$H01M\ 4/38^{(2006.01)}$

(52) Cooperative Patent Classification (CPC):
H01M 4/131; H01M 4/1397; H01M 4/364;
H01M 4/582; H01M 4/5825; H01M 10/0525;
H01M 10/0562; H01M 4/134; H01M 4/1395;
H01M 4/382; H01M 4/386; H01M 2300/008

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **Centre National de la Recherche Scientifique**
**75794 Paris Cedex 16 (FR)**
• **NANTES UNIVERSITÉ**
**44035 Nantes Cedex 1 (FR)**

(72) Inventors:
• **Stamenkovic, Branimir**
**44100 Nantes (FR)**
• **Gaubicher, Joël**
**44000 Nantes (FR)**
• **Moreau, Philippe**
**44850 Saint-Mars-du-Désert (FR)**

(74) Representative: **Cabinet Chaillot**
**16/20, avenue de l'Agent Sarre**
**B.P. 74**
**92703 Colombes Cedex (FR)**

(54) **ACTIVATING METHOD FOR AN ALL-SOLID-STATE BATTERY COMPRISING HALIDE ELECTROLYTE**

(57) The present invention relates to a method for activating an all-solid-state battery comprising a halide electrolyte having the formula:

$$Li_{[(x-y)+a+b+c+p]}Na_yZr_{(1-a-b-c)}Er_aY_bSC_cCl_{[(4+x)-m-n-o-p]}I_mBr_nF_oO_p$$

in which: $0.2 \leq x \leq 6$; $0 \leq y \leq 6$; $0 \leq a \leq 1$; $0 \leq b \leq 1$; $0 \leq c \leq 1$; $0 \leq m \leq 1$; $0 \leq n \leq 1$; $0 \leq o \leq 1$; $0 \leq p \leq 2$; with $0 \leq a+b+c \leq 1$ and $(4+x) > (m+n+o+p)$, characterized in that the battery is activated by charging it at a voltage greater than 4.0 V vs $Li^+/Li$.

EP 4 621 865 A1

## Description

The present invention relates to a method for activating an all-solid-state battery comprising halide electrolyte.

All-Solid-State Batteries (ASSBs) stand poised to surpass the energy densities of Li-ion batteries and alleviate safety concerns. Among diverse solid-state electrolytes (SEs), halides, notably $Li_2ZrCl_6$ (LZC), exhibit stability window up to 4 V vs $Li^+/Li^0$ and whereas Y-doped LZC showed a reversible electrochemical activity in this potential region. Yet, the untapped potential of halides SEs for enhancing overall ASSB performance remains unexplored, diverging from their conventional use solely for ionic conduction.

It has been discovered that halide electrolytes under certain activation conditions allow remarkable enhancements in the specific capacity of all solid-state cells driven by combined effects that concurrently address major issues in silicon and anode-less chemistry. Notably, such activation of the battery yields outstanding performance from industry-relevant, highly loaded electrodes, showcasing significant advancements in ASSB technology. Furthermore, the tunability of these effects by adjusting the initial Li composition of the solid electrolyte (SE) is demonstrated.

Thus, the invention relates to a method for activating an all-solid-state battery comprising a halide electrolyte having the formula:

$$Li_{[(x-y)+a+b+c+p]}Na_yZr_{(1-a-b-c)}Er_aY_bSc_cCl_{[(4+x)-m-n-o-p]}I_mBr_nF_oO_p$$

in which:

- 
$$0.2 \leq x \leq 6;$$

- 
$$0 \leq y \leq 6;$$

- 
$$0 \leq a \leq 1;$$

- 
$$0 \leq b \leq 1;$$

- 
$$0 \leq c \leq 1;$$

- 
$$0 \leq m \leq 1;$$

- 
$$0 \leq n \leq 1;$$

- 
$$0 \leq o \leq 1;$$

-

$$0 \leq p \leq 2;$$

- with $0 \leq a+b+c \leq 1$,

- with $(4+x) > (m+n+o+p)$,

characterized in that the battery is activated by charging it at a voltage greater than 4.0 V vs Li$^+$/Li.

In one particular embodiment, the battery can be activated by charging it at a voltage greater than or equal to 4.5 V vs Li$^+$/Li, preferably greater than or equal to 5.0 V vs Li$^+$/Li.

The halide electrolyte may be selected from: Li$_x$ZrCl$_{4+x}$, wherein x is a number from 0.4 to 6, being in particular Li$_{0.4}$ZrCl$_{4.4}$, Li$_{0.59}$ZrCl$_{4.59}$, Li$_{0.8}$ZrCl$_{4.8}$, LiZrCl$_5$, Li$_2$ZrCl$_6$, Li$_3$ZrCl$_7$, Li$_4$ZrCl$_8$, Li$_5$ZrCl$_9$ and Li$_6$ZrCl$_{10}$.

In one particular embodiment, the battery has a cathode, the active material of which can be selected from LiFePO$_4$, LiMn$_2$O$_4$, Li$_3$V$_2$(PO$_4$)$_3$, LiVOPO$_4$, Li$_2$VOPO$_4$F and Li$_{a'}$Ni$_{x'}$Mn$_{y'}$Co$_{z'}$O$_2$ with x'+y'+z'=1 and 0 < a' < 1.2.

In one particular embodiment, the battery is anode less.

In one particular embodiment, the battery has an anode, the active material of which can be selected from lithium metal, lithium-indium alloy, silicon, tin or carbon intercalation materials. The lithium-indium alloy can be LiIn$_{x''}$ with $0 < x'' \leq 3$. The intercalation materials can be selected from graphite and hard carbon.

In one particular embodiment, the halide electrolyte can be under the form of a layer. The battery can also further comprise a second electrolyte layer comprised of sulfide electrolyte, such as Li$_6$PS$_5$Cl.

METHODS:

Electrolytes synthesis:

Li$_x$ZrCl$_{4+x}$ (x = 0. 4, 0. 59, 0. 8, 1, 2, 3) (LZC) electrolytes were synthesized using starting materials: LiCl (>99%, Sigma Aldrich), dried overnight at 160°C under vacuum, and ZrCl$_4$ (98%, anhydrous, Sigma Aldrich).

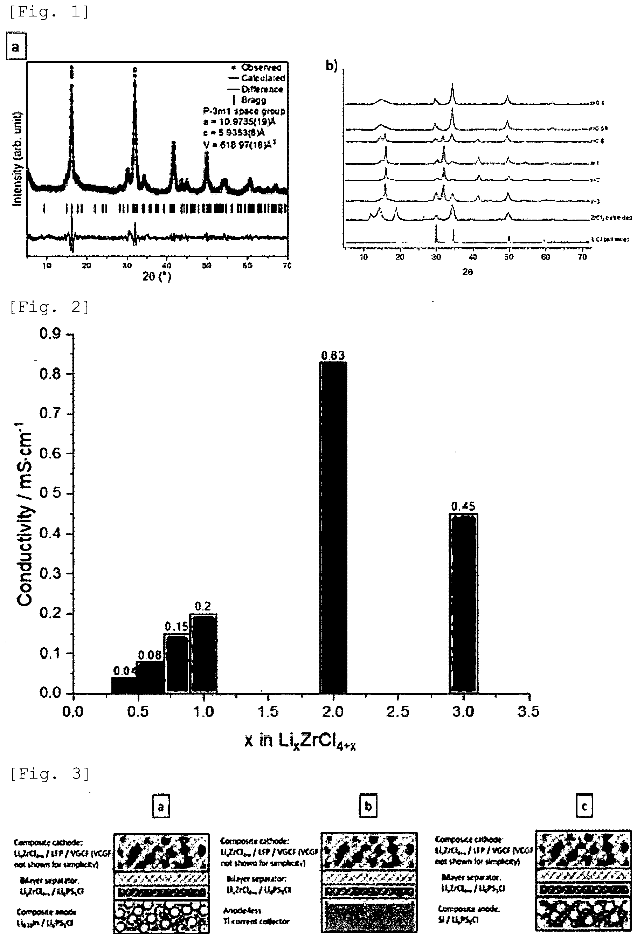

The stoichiometric amount of LiCl was first crushed in a mortar with pestle in dry argon glove box, to reduce the particle size. After that, the stoichiometric amount of ZrCl$_4$ was added to the mortar and mixed for 10 minutes with LiCl. The mixture was then placed in a 25ml ZrO$_2$ ball-milling jars along with 10 ZrO$_2$ balls of 10 mm diameter. The Li$_x$ZrCl$_{4+x}$ electrolytes used in this work were synthesized over 50h at 600 rpm, with 15 minutes break between each 1 hour cycle. XRD diagrams of Li$_x$ZrCl$_{4+x}$ compounds along with the full pattern matching refinement of Li$_2$ZrCl$_6$ that confirms the synthesis steps are reported in Figure 1. Asterisks in Figure 1b indicate the presence of a new set of broad peaks vs Li$_2$ZrCl$_6$. Variations of the Li$_x$ZrCl$_{4+x}$ conductivities vs x has been characterized by impedance spectroscopy (Figure 2).

Electrode preparation:

Cathodes

The cathodes used for the evaluation of the electrolyte redox activity, that is the ones consisting of Li$_x$ZrCl$_{4+x}$ electrolyte and single wall carbon nanotubes (P2SWNT), as well as the electrodes with LiFePO$_4$ (LFP) as the active material and vapor grown carbon fibers (VGCFs), used for galvanostatic cycling, are prepared by mixing the materials in their respective weight ratios by ball milling at 300 rpm for 2 hours. The ball milling was done in the same system described for the case of electrolytes synthesis.

Anodes

Li$_{0.33}$In composite anode was prepared by folding Li metal foil into an In metal foil in 2:98 weight ratio, until the resulting Li$_{0.33}$In alloy became brittle. After that the foil was crushed and mixed using mortar and pestle with argyrodite Li$_6$PS$_5$Cl (LPSC) electrolyte (NEI Corporation) in 60:40 wt% ratio.

To make Si composite anode, (LPSC) and Si powder having grain size in the micrometer range (referred to as micro-Si) were mixed in the ball milling jar in 50:50 under the same conditions as for the cathode.

Electrochemical impedance spectroscopy:

To measure the conductivity of electrolytes, 120 mg of electrolyte powder was pressed under 375 MPa for 3 minutes, between two titanium plungers in an in-house built system comprised of 2 Ti plungers and a PEEK insulating cylinder. Then, the cell was taken into a pressure holder that exerted 100 MPa of stack pressure onto it.

To measure the impedance of the full cell with different composite cathodes, the EIS measurements were taken after each cycle or after each charge or discharge sequence at the same pressure used during the cycling of the cells.

The sinusoidal voltage of 10mV amplitude was applied in the frequency range 100 mHz - 100 kHz to the cell. The corresponding signal is plotted in the form of Nyquist diagram, typically showing a straight line. The resistance of the electrolyte was found by the intersect of the interpolated straight line with the real axis. The conductivity was calculated based on the equation:

$$\sigma = 1/A * 1/R,$$

where l is the thickness of the electrolyte pellet (measured individually for each pellet: usually in the 500-700 $\mu$m range) and A is the surface area of the pellet (0.785 cm$^2$)

Cells assembly:

Each cell was made in the in-house made system comprised of 2 Ti plungers and a PEEK insulating cylinder. By compressing 40mg layer of $Li_6PS_5Cl$ (NEI Corporation) at 125MPa for 10 seconds, the first layer (LPSC layer) of separator is formed. Second layer of the bi-layer separator is made by compressing 40mg $Li_xZrCl_{4+x}$ (x = 0. 4, 0. 59, 0. 8, 1, 2 and 3) (LZC layer) on top of the first layer at 375 MPa for 1 minute. Then, appropriate amount of specific composite cathode powder was placed on top the LZC layer, and corresponding amount of composite anode, when present, was placed on top of the LPSC layer. Finally, the whole stack was pressed at 375MPa for 3 minutes. Each cell would, then, be placed in an in-house designed holder, and the pressure of either 100 MPa or 75 MPa was applied.

The three cell schematics are depicted in Figure 3. Each of the cell integrates a positive electrode resulting from the mixture of LZC, LFP and VGCF, a LZC/LPSC bilayer electrolyte and $Li_{0.33}In$ anode in cell (a), anode-less in cell (b) and Si anode in cell (c).

Cyclic voltammetry:

Around 12 mg of composite cathode composed of $Li_xZrCl_{4+x}$ (x = 0.4, 0.59, 0.8, 1, 2 and 3) and single wall carbon nanotubes referred to as P2SWNT (Carbon solution inc. ) in 85:15 wt% was used for each measurement. The voltage was linearly increased/decreased in the range 2.5V - 5V vs Li+/Li, while the current was measured. Each experiment was repeated 6 times. To evaluate the capacity the area under current (mA/g) - time (h) was integrated using Origin software or EC-Lab software.

Full cell cycling:

Full cell with $Li_{0.33}In$ alloy composite anode was made using 18 mg of composite cathode made out of LZC, LFP and vapor grown carbon fibers (VGCFs) in a 59.7:33.3:7 weight ratio as described previously, and 30 mg of the composite anode.

Cell was cycled galvanostatically at C/10 for 2 cycles: during the first cycle the voltage range was 2.5V - 3.8 V vs Li+/Li in order to extract the capacity coming purely from LFP cathode active material; on the second cycle the voltage range of 2.5V - 5V vs Li+/Li was applied in order to utilize the capacity of LFP and oxidation of LZC electrolyte. This was followed by 5 cycles at C/5, and C/2, after which 100 cycles at 1C were performed in the voltage range 2.5 V - 5 V vs Li+/Li. Finally, the capacity retention of both LFP and LZC oxidation after 100 cycles is demonstrated by performing the same cycling conditions as in the initial 2 cycles.

Anode-less cell was utilizing 11.5 mg of composite cathode made out of LZC, LFP and VGCF in 53.7: 33.3:10 weight ratio in order to extract more capacity from LZC oxidation and improve the performance of the anode-less cell. Galvanostatic cycling was performed at C/10 for 11 cycles.

Full cell using a composite silicon anode was composed of 43.5 mg of composite cathode consisting of LZC, LFP and VGCF in 44.7:50:5.3 weight ratio and composite anode made of the mixture of LPSC and micro-Si as previously described, while having the nominal capacity of the anode set to be 3 times larger than that of the cathode. This was done to insure most of the capacity fade is a result of interphase (referred to as SEI) formation between micro-Si and LPSC electrolyte. The full cell was, then, galvanostatically cycled in 2.5 V - 3.8 V vs Li+/Li voltage ratio at C/10 (C being the theoretical capacity of the cathode). After that, the cell undergoes 1 cycle in the voltage range 2.5 V - 5V in order to extract the capacity from the LZC oxidation, followed by 3 cycles in lower voltage range, to unveil if this additional capacity could increase the Li+ ion storage in the LFP cathode material.

RESULTS

The cells integrating positive electrode resulting from the mixture of LZC, LFP and VGCF, a LZC/$Li_6PS_5Cl$ bilayer electrolyte and $Li_{0.33}In$, anode-less or micro-Si negative electrode as represented in Figure 3 have been tested. These cells were charged either to 4V, which is typical when cycling LFP active material, or 5V to purposely oxidize the halide electrolyte.

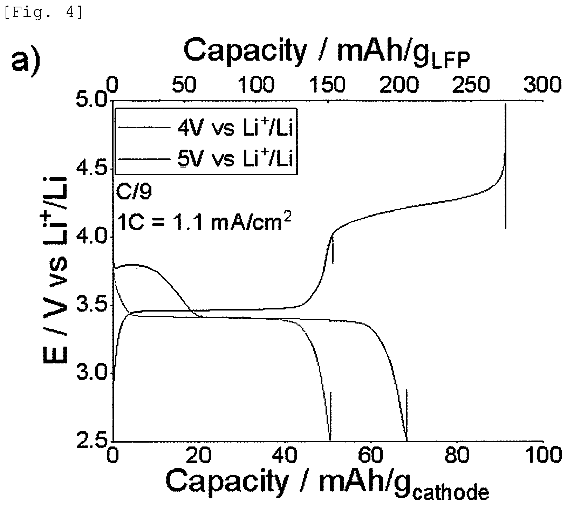

For the $Li_{0.33}In$ half-cell, under a 4 V charge, the typical LFP profile delivers nearly 150 mAh/$g_{LFP}$, (50 mAh/$g_{cathode}$) under 0.12 mA/$cm^2$ (Figure 4). However, when the charge is extended to 5V, the LZC electroactivity occurs from 4 V vs $Li^+$/Li, dramatically enhancing the overall electrode discharge capacity by 35%, to 68 mAh/$g_{cathode}$ (205 mAh/$g_{LFP}$) (Figure 4). Moreover, although the reduction of LZC is characterized by a germination-growth like response, the LFP discharge plateau at 3.4 V exhibited no signs of additional polarization. This demonstrates that although LZC can be advantageously used as a second active material it appears to maintain its electrolyte properties.

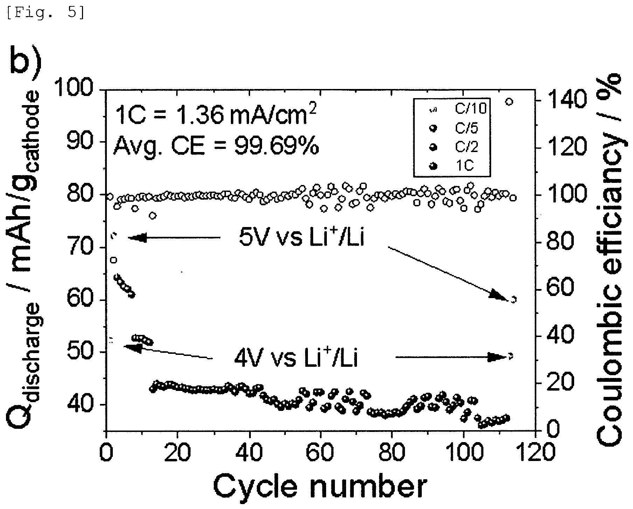

The combined electroactivity of LZC and LFP consistently surpassed that of LFP alone by 22% even after 110 cycles (Figure 5). Furthermore, the 94% capacity retention of LFP confirms the enduring conduction property of this redox electrolyte.

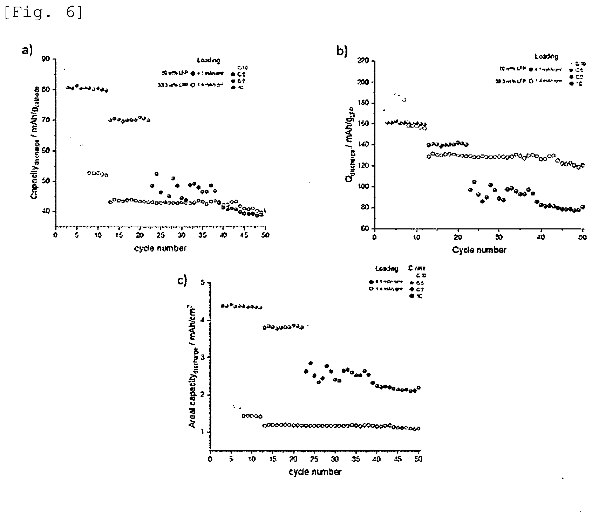

Notably, increasing the LFP loading from 33 to 50 wt% and areal capacity from 1.4 to 4.1 mAh/$cm^2$, yielded competitive gains (+17%) in specific capacity per mass of LZC. In fact, triggering the LZC redox activity allows to reach the same capacity at five times higher C-rate (Figure 6 representing the capacity normalized by: a) total mass of cathode; b) mass of LFP; c) area of the cell in function of the cycle number).

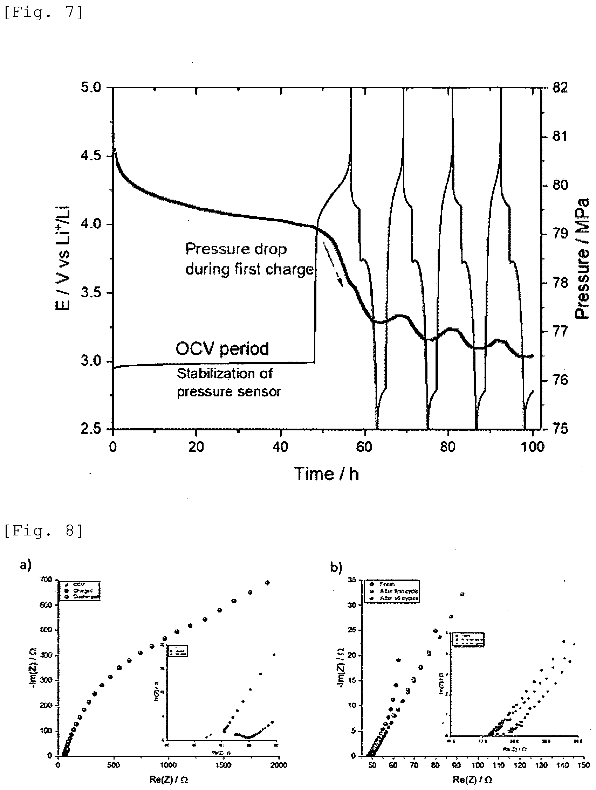

Interestingly, the initial oxidation process is characterized by an irreversible decrease in cell pressure despite Li alloying occurring at the negative electrode along with a significant increase in cell impedance (Figure 7 showing the variation of a half-cell stack pressure bearing LZC/P2SWNT composite cathode during cycling and Figure 8a showing the EIS of half-cell with LZC/P2SWNT composite cathode at open-circuit voltage (OCV), the first charge being at 5V vs $Li^+$/Li and subsequent discharge to 2.5 V vs $Li^+$/Li). These results are likely indicative of substantial structural and morphological changes. However, strikingly, electrochemical impedance spectroscopy measurements of the reduced sample (Figure 8b showing the EIS of half-cell with LZC/P2SWNT composite cathode in the discharged state (at 2.5V vs Li+/Li) after 1st, 2nd and 10th cycle) indicates that cell impedance reverts to a value close to the pristine state. This unexpected property is a factor enabling LFP-based electrode to operate without additional polarization, regardless of whether the electrochemical activity of LZC is triggered (Figure 4).

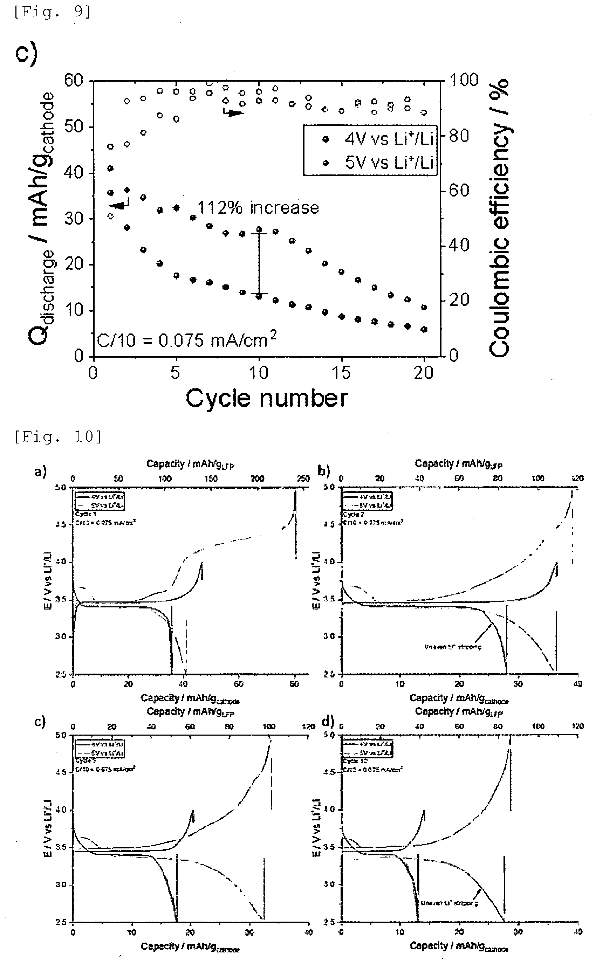

For the anode-less cell, triggering LZC electroactivity resulted in an astounding 112% capacity increase after 10 cycles, accompanied by significantly improved Coulombic efficiencies (Figure 9). Equally noteworthy is the effect on cell safety and longevity, as dendrite-related irregularities were deferred from the second discharge to the tenth cycle (Figures 10 showing the 1st (a), 2nd (b), 5th (c) and 10th (d) galvanostatic charge/discharge cycle of the anode-less cell in 2.5V - 4 V and 2.5 - 5 V voltage range).

These findings indicate the potential of halide electrochemistry for *in situ* deposition of a thin and uniform layer of lithium metal, offering a solution to common issues encountered in anode-less cell configurations.

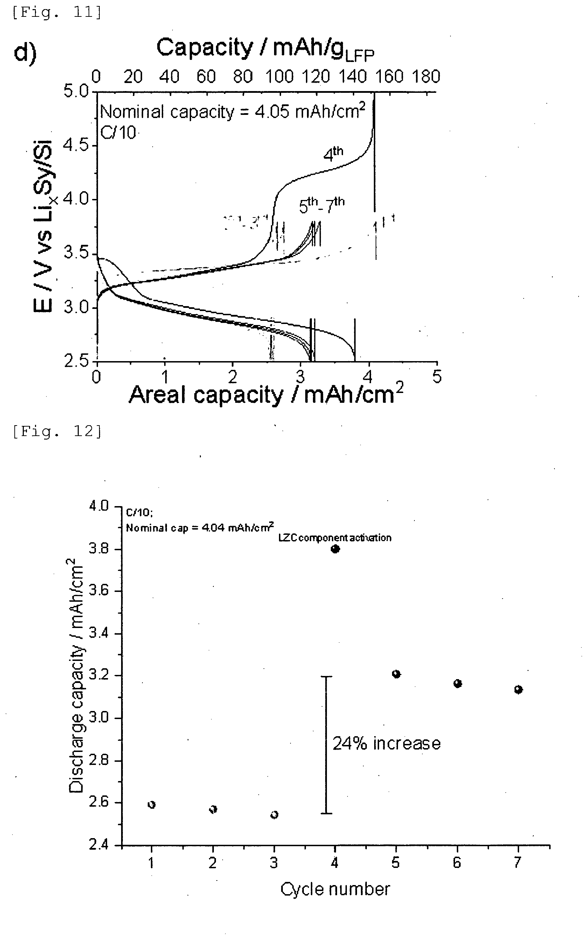

Similarly, a micro-Si based full cell assembled at 4.1 mAh/$cm^2$, shows a 37% capacity loss during the initial cycle, coupled with low Coulombic efficiency (Figure 11). However, upon triggering LZC electroactivity, a remarkable 50% enhancement in discharge specific capacity was achieved. These improvements stem from two primary factors: the additional discharge capacity associated with LZC activity, and the heightened activity of LFP (Figure 11, Figure 12 showing the increase in the discharge capacity upon triggering the oxidation of LZC on cycle 4 and resuming to cycling without oxidation of LZC on cycle 5). This underscores the reparative capability of halide electrolytes in Si-based full cells, suggesting that LZC can replenish the loss of active Li/e-.

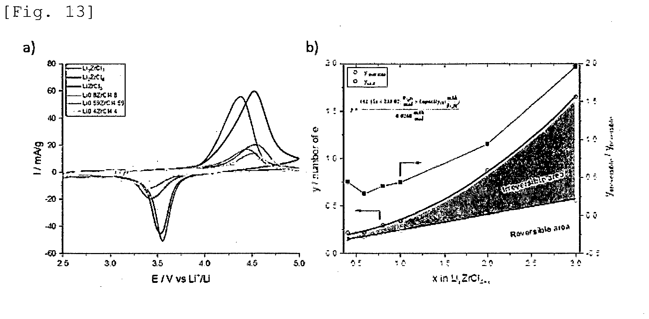

Regardless of the $Li_xZrCl_{4+x}$ (LxZC) composition (x = 0.4, 0.59, 0.8, 1,2 and 3), partially reversible faradic activity was observed at approximately 4V vs. $Li^+$/Li (Figure 13a cyclic voltammograms of the different LixZC). This reversible capacity thus enables the enhancement of the positive LFP electrode's capacity, while the irreversible capacity is transferred to the negative electrode, compensating for irreversible electron loss. By leveraging the chloride redox chemistry, the non-stoichiometric composition of the halide electrolyte thus becomes a new and strong parameter for balancing the two electrodes. Indeed, reversible and irreversible capacities show linear and parabolic relationships with the LxZC composition, respectively and the ratio of these two capacities increases by nearly 200% from x=0.4 to x=3 (Figure 13b, showing the variations of reversible and total (reversible + irreversible) capacities referred to as "y" as well as the ratio of $y_{total}$/$y_{reversible}$ against the compositions of the halide $Li_xZrCl_{4+x}$ solid electrolytes. $y_{total}$ and $y_{reversible}$ correspond to the average value over the 5 first cycles).

**Claims**

**1.** - A method for activating an all-solid-state battery comprising a halide electrolyte having the formula:

$$Li_{[(x-y)+a+b+c+p]}Na_yZr_{(1-a-b-c)}Er_aY_bSc_cCl_{[(4+x)-m-n-o-p]}I_mBr_nF_oO_p$$

in which:

- 

$$0.2 \leq x \leq 6;$$

- 

$$0 \leq y \leq 6;$$

- 

$$0 \leq a \leq 1;$$

- 

$$0 \leq b \leq 1;$$

- 

$$0 \leq c \leq 1;$$

- 

$$0 \leq m \leq 1;$$

- 

$$0 \leq n \leq 1;$$

- 

$$0 \leq o \leq 1;$$

- 

$$0 \leq p \leq 2;$$

- with $0 \leq a+b+c \leq 1$,
- with $(4+x) > (m+n+o+p)$,

**characterized in that** the battery is activated by charging it at a voltage greater than 4.0 V vs Li$^+$/Li.

2. - The method according to claim 1, **characterized in that** the battery is activated by charging it at a voltage greater than or equal to 4.5 V vs Li$^+$/Li, preferably greater than or equal to 5.0 V vs Li$^+$/Li.

3. - The method according to one of claims 1 or 2, **characterized in that** the halide electrolyte is selected from: Li$_x$ZrCl$_{4+x}$, wherein x is a number from 0.4 to 6, being in particular Li$_{0.4}$ZrCl$_{4.4}$, Li$_{0.59}$ZrCl$_{4.59}$, Li$_{0.8}$ZrCl$_{4.8}$. LiZrCl$_5$, Li$_2$ZrCl$_6$, Li$_3$ZrCl$_7$, Li$_4$ZrCl$_8$, Li$_5$ZrCl$_9$ and Li$_6$ZrCl$_{10}$.

4. - The method according to anyone of claims 1 to 3, **characterized by** the fact that the battery has a cathode, the active material of which is selected from $LiFePO_4$, $LiMn_2O_4$, $Li_3V_2(PO_4)_3$, $LiVOPO_4$, $Li_2VOPO_4F$ and $Li_{a'}Ni_{x'}Mn_{y'}Co_{z'}O_2$ with $x'+y'+z'=1$ and $0 < a' < 1.2$.

5. - The method according to anyone of claims 1 to 4, **characterized by** the fact that the battery is anode less.

6. - The method according to anyone of claims 1 to 4, **characterized by** the fact that the battery has an anode, the active material of which is selected from lithium metal, lithium-indium alloy, silicon, tin or carbon intercalation materials.

7. - The method according to claim 6, **characterized by** the fact that the lithium-indium alloy is $LiIn_{x''}$ with $0 < x'' \leq 3$.

8. - The method according to anyone of claims 6 and 7, **characterized by** the fact that the intercalation materials are selected from graphite and hard carbon.

9. - The method according to anyone of claims 1 to 8, **characterized by** the fact that the halide electrolyte is under the form of a layer.

10. - The method according to claim 9, **characterized by** the fact that the battery further comprises a second electrolyte layer comprised of sulfide electrolyte, such as $-Li_6PS_5Cl$.

[Fig. 1]

[Fig. 2]

[Fig. 3]

[Fig. 4]

a)

[Fig. 5]

[Fig. 6]

[Fig. 7]

[Fig. 8]

[Fig. 9]

[Fig. 10]

[Fig. 11]

d)

Capacity / mAh/g$_{LFP}$

Nominal capacity = 4.05 mAh/cm$^2$
C/10

[Fig. 12]

[Fig. 13]

Europäisches
Patentamt

European
Patent Office

Office européen
des brevets

**EUROPEAN SEARCH REPORT**

**Application Number**

EP 24 31 5106

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN SHUAI ET AL: "Unraveling Electrochemical Stability and Reversible Redox of Y-Doped Li 2 ZrCl 6 Solid Electrolytes", ENERGY MATERIAL ADVANCES, vol. 4, 15 March 2023 (2023-03-15), XP093223244, ISSN: 2692-7640, DOI: 10.34133/energymatadv.0019 * Materials synthesis - Solid-state battery fabrications * * Electrochemical measurements * * Results and Discussion - page 5, column 1 * * figures 2A,C,D * | 1,2,5,6, 8-10 | INV. H01M4/131 H01M4/1397 H01M4/36 H01M4/58 H01M10/0525 H01M10/0562 ADD. H01M4/134 H01M4/1395 H01M4/38 |
| X | WO 2023/038031 A1 (SUMITOMO CHEMICAL CO [JP]; UNIV KYOTO [JP]) 16 March 2023 (2023-03-16) * abstract * -& EP 4 389 708 A1 (SUMITOMO CHEMICAL CO [JP]; UNIV KYOTO [JP]) 26 June 2024 (2024-06-26) * paragraph [0065] - paragraph [0067] * * paragraph [0082] - paragraph [0086] * * paragraph [0096] - paragraph [0100] * * paragraph [0107] - paragraph [0110] * * figures 9-11 * | 1,4-10 | |
| X | US 2023/387454 A1 (NAZAR LINDA [CA] ET AL) 30 November 2023 (2023-11-30) * paragraph [0220] * * paragraph [0229] - paragraph [0233] * * figures 2, 3 * | 1,2,4-10 | |

**TECHNICAL FIELDS SEARCHED (IPC)**

H01M

-/--

The present search report has been drawn up for all claims

| Place of search | Date of completion of the search | Examiner |
|---|---|---|
| The Hague | 18 November 2024 | Fertig, Andrea |

EPO FORM 1503 03.82 (P04C01)

Europäisches
Patentamt

European
Patent Office

Office européen
des brevets

# EUROPEAN SEARCH REPORT

**Application Number**

EP 24 31 5106

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2021 0131726 A (-) 3 November 2021 (2021-11-03) * paragraph [0183] - paragraph [0187] * * paragraph [0218] - paragraph [0221] * * paragraph [0226] - paragraph [0232] * * figure 4 * | 1,3-9 | |
| T | CRONK ASHLEY ET AL: "Overcoming the Interfacial Challenges of LiFePO 4 in Inorganic All-Solid-State Batteries", ACS ENERGY LETTERS, vol. 8, no. 1, 3 January 2023 (2023-01-03) , pages 827-835, XP093224338, American Chemical Society ISSN: 2380-8195, DOI: 10.1021/acsenergylett.2c02138 Retrieved from the Internet: URL:https://pubs.acs.org/doi/pdf/10.1021/a csenergylett.2c02138> * figure 1d * | | |
| T | STAMENKOVIC BRANIMIR ET AL: "Communication-Fueling from the Electrochemistry of Halide Solid Electrolytes", JOURNAL OF THE ELECTROCHEMICAL SOCIETY, vol. 171, no. 5, 28 May 2024 (2024-05-28), page 50554, XP093223147, Journal of the Electrochemical Society2018Electrochemical Society Inc.usa ISSN: 0013-4651, DOI: 10.1149/1945-7111/ad4c99 Retrieved from the Internet: URL:https://iopscience.iop.org/article/10. 1149/1945-7111/ad4c99/pdf> * Electrochemical characterizations * * Results and Discussion * | | |

**TECHNICAL FIELDS SEARCHED (IPC)**

The present search report has been drawn up for all claims

| Place of search | Date of completion of the search | Examiner |
|---|---|---|
| The Hague | 18 November 2024 | Fertig, Andrea |

EPO FORM 1503 03.82 (P04C01)

## ANNEX TO THE EUROPEAN SEARCH REPORT
## ON EUROPEAN PATENT APPLICATION NO.

EP 24 31 5106

This annex lists the patent family members relating to the patent documents cited in the above-mentioned European search report.
The members are as contained in the European Patent Office EDP file on
The European Patent Office is in no way liable for these particulars which are merely given for the purpose of information.

18-11-2024

| Patent document cited in search report | | Publication date | Patent family member(s) | | Publication date |
|---|---|---|---|---|---|
| WO 2023038031 | A1 | 16-03-2023 | CN | 117916201 A | 19-04-2024 |
| | | | EP | 4389708 A1 | 26-06-2024 |
| | | | JP | 7174875 B1 | 17-11-2022 |
| | | | JP | 2023038890 A | 17-03-2023 |
| | | | KR | 20240052961 A | 23-04-2024 |
| | | | WO | 2023038031 A1 | 16-03-2023 |
| EP 4389708 | A1 | 26-06-2024 | CN | 117916201 A | 19-04-2024 |
| | | | EP | 4389708 A1 | 26-06-2024 |
| | | | JP | 7174875 B1 | 17-11-2022 |
| | | | JP | 2023038890 A | 17-03-2023 |
| | | | KR | 20240052961 A | 23-04-2024 |
| | | | WO | 2023038031 A1 | 16-03-2023 |
| US 2023387454 | A1 | 30-11-2023 | CN | 116438142 A | 14-07-2023 |
| | | | EP | 4229006 A1 | 23-08-2023 |
| | | | JP | 2023545828 A | 31-10-2023 |
| | | | KR | 20230088776 A | 20-06-2023 |
| | | | US | 2023387454 A1 | 30-11-2023 |
| | | | WO | 2022079156 A1 | 21-04-2022 |
| KR 20210131726 | A | 03-11-2021 | NONE | | |

EPO FORM P0459

For more details about this annex : see Official Journal of the European Patent Office, No. 12/82